# EUROPÄISCHE PATENTSCHRIFT

(11) **EP 2 097 651 B1**
(45) Veröffentlichungstag und Bekanntmachung des Hinweises auf die Patenterteilung: **03.10.2012**
(21) Anmeldenummer: 07819881.9
(22) Anmeldetag: 21.11.2007
(51) Int. Cl.: F16C 33/60, F16C 19/38

(54) **ROLLENLAGER, INSBESONDERE MITTENFREIES GROSSWÄLZLAGER**
ROLLER BEARING, PARTICULARLY SLEWING RING BEARING WITH NO CENTER
PALIER À ROULEAUX, EN PARTICULIER GRAND PALIER À ROULEMENT À CENTRE LIBRE

(30) Priorität: 27.11.2006 DE 102006056186
(43) Veröffentlichungstag der Anmeldung: 09.09.2009
(73) Patentinhaber: Rothe Erde GmbH, 44137 Dortmund (DE)
(72) Erfinder: THOM, Tobias, 58339 Breckerfeld (DE)
(74) Vertreter: Dahlkamp, Heinrich-Leo
(86) Internationale Anmeldenummer: PCT/EP2007/010063
(87) Internationale Veröffentlichungsnummer: WO 2008/064805

(56) Entgegenhaltungen:
- DE-A1- 3 034 008
- DE-U1-202006 007 060
- US-A- 4 906 113

## Beschreibung

Die Erfindung bezieht sich auf ein Rollenlager, insbesondere mittenfreies Großwälzlager, bestehend aus ein- oder mehrteilig ausgebildetem Innenring und Außenring und zwischen ihnen angeordneten, auf Laufbahnen abwälzenden Wälzkörpern, die einen am Außenring befestigten Nasenring mit Tragrollen in axialer und mit Radialrollen in radialer Richtung führen.

Aus der EP 413 119 B1 ist ein mittenfreies Großwälzlager bekannt, bei dem ein Tragrollenlager und ein Halterollenlager sowie ein Radialrollenlager zwischen einer radial gerichteten Nase eines Innenringes und einer u-förmig ausgebildeten Aussparung des Außenringes angeordnet sind. Ansonsten ist zwischen Innen- und Außenring jeweils ein Spalt vorhanden, um möglichst keine zusätzliche Reibung zwischen den sich gegeneinander bewegenden Flächen der beiden Ringe zu verursachen. Bei derartigen Großwälzlagern kann es bei großen Durchmessern erforderlich sein, dass Steifigkeitsdefizite aus der Anschlußkonstruktion durch das Großwälzlager kompensiert werden müssen.

In der DE 30 34 008 A1 ist eine mittenfreie Wälzlager-Drehverbindung beschrieben, die aus zwei konzentrischen Laufringen besteht, von denen der eine eine umlaufende, zum anderen Laufring hin offene Nut und der andere einen umlaufenden mit allseitigem Abstand in die Nut eingreifenden Vorsprung besitzt und wobei zwischen der Mantelfläche des Vorsprungs einerseits und einer korrespondierenden Fläche in der Nut andererseits Zylinderrollen zur Aufnahme von Radialkräften, und zwischen den Stirnflächen des Vorsprungs einerseits und korrespondierenden Stirnflächen der Nut andererseits zur Aufnahme von Axialkräften je eine Reihe von Wälzkörpern vorgesehen ist, von denen wenigstens die die Hauptaxialbelastung übertragende Tragreihe zylindrische Wälzkörper enthält. Dabei sind im Bereich der der Tragreihe gegenüberliegenden, nur das abhebende Kippmoment aufnehmenden Haltereihe sowohl am Übergang des Vorsprungs in den zugehörigen Laufring, als auch des Laufbahnbereiches der Nut in den Nutgrund kreisbogenförmige Abschnitte vorgesehen, deren Radien mindestens im Radius dem in der Haltereihe angeordneten Wälzkörper entsprechen. Die Haltereihe enthält insbesondere Kugeln, welche in annähernd der Kugelkontur angepassten Kugelrillen des Vorsprungs einerseits und in der Nut andererseits abrollen, wobei die Kugelrillen absatzlos in Zylindermantelflächen der zugehörigen Laufringe übergehen. Die Rillen sind dabei so ausgebildet, dass an den Übergangsstellen Verformungen auf Grund zu hoher Biegespannungen vermieden werden.

Es hat sich gezeigt, dass bei bestimmten Ausführungen der Nase bzw. des Nasenringes es zu Verformungen der Nase bzw. des Nasenringes kommen kann. Das gilt insbesondere dann, wenn für die Nase bzw. den Nasenring ein relativ weiches Material verwendet wird. Darüber hinaus kann es bei sehr großen Durchmessern der Ringe, von zum Beispiel mehr als 10 Metern, zu einer radialen Relativbewegung zwischen Außenring und Innenring in der Weise kommen, dass der Nasenring sich ablöst.

Der Erfindung liegt die Aufgabe zu Grunde, eine verbesserte Konstruktion des Rollenlagers vorzuschlagen, bei der die unerwünschte Verformung der Nase bzw. des Nasenringes und eine Ablösung verhindert wird.

Die Lösung dieser Aufgabe ist im Patentanspruch 1 angegeben, wobei vorgeschlagen wird, dass zwischen Innenring und dem Nasenring des Außenringes ein zusätzliches Wälzlager mit diagonalen Halterollen angeordnet ist. Die Halterollen sind dabei in der Haltebahn des Wälzlagers in diagonaler Richtung eingesetzt. Durch diese diagonale Anordnung kann das Lager zusätzliche Radiallasten aufnehmen und somit die Verformung des Nasenringes verhindern bzw. verringern.

Der Innenring ist insbesondere zweigeteilt ausgeführt und besteht aus einem Tragring und damit verschraubtem Haltering, wobei das zusätzliche Lager mit den diagonalen Halterollen zwischen dem Haltering des Innenringes und dem Nasenring angeordnet ist und die diagonalen Halterollen und die Tragrollen in axialer Richtung am Nasenring gegenüberliegen.

Das zusätzliche Wälzlager ist insbesondere als Kreuzrollenlager ausgebildet.

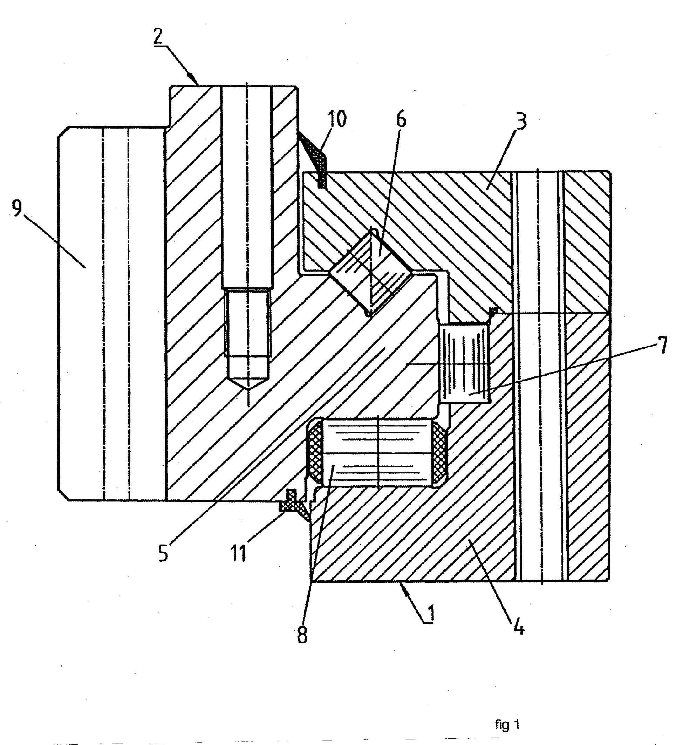

Die Erfindung wird anhand der beigefügten Figur beispielsweise näher erläutert.

Das dargestellte Rollenlager bzw. Großwälzlager besteht aus einem Innenring 1 und einem Außenring 2, zwischen denen die verschiedenen Wälzkörper 6 bis 8 auf Laufbahnen angeordnet sind. Der Innenring 1 ist zweigeteilt ausgeführt und besteht aus dem Tragring 4 und dem damit verschraubbaren Haltering 3. Am Außenring 2 befindet sich die nach außen gerichtete Verzahnung 9 und der nach innen gerichtete Nasenring 5. Zwischen dem Nasenring 5 und dem Tragring 4 befinden sich in an sich bekannter Weise die Tragrollen 8 und die Radialrollen 7. Erfindungsgemäß ist zusätzlich die Halterolle 6 mit einer diagonalen Anordnung, d.h. um 45 Grad gedreht, in das Laufsystem des Großwälzlagers eingebracht. Dieses ermöglicht eine zusätzliche Aufnahme von Radiallasten.

Zur Abdichtung des Großwälzlagers sind zwischen dem Außenring 2 und dem Innenring 1 in an sich bekannter Weise die Dichtungen 10 und 11 vorhanden.

Die Anordnung von Innenring und Außenring kann erfindungsgemäß auch umgekehrt werden.

### Bezugszeichenliste:

- 1: Innenring
- 2: Außenring
- 3: Haltering
- 4: Tragring
- 5: Nasenring
- 6: Wälzkörper (Halterolle bzw. Haltebahn)
- 7: Wälzkörper (Radialrolle bzw. Radialbahn)
- 8: Wälzkörper (Tragrolle bzw. Tragbahn)
- 9: Verzahnung (an 2 bzw. 5)
- 10: Dichtung (zwischen 3 und 5)
- 11: Dichtung (zwischen 4 und 5)

## Patentansprüche

1. Rollenlager, insbesondere mittenfreies Großwälzlager, bestehend aus ein- oder mehrteilig ausgebildetem Innenring (1) und Außenring (2) und zwischen ihnen angeordneten auf Laufbahnen abwälzenden Wälzkörpern (6, 7, 8), die einen am Außenring (2) befestigten Nasenring (5) mit Tragrollen (8) in axialer und mit Radialrollen (7) in radialer Richtung führen, **dadurch gekennzeichnet, dass** zwischen Innenring (1) und dem Nasenring (5) des Außenringes (2) ein zusätzliches Wälzlager mit diagonalen Halterollen (6) angeordnet ist.

2. Rollenlager nach Anspruch 1, **dadurch gekennzeichnet, dass** der Innenring (1) zweigeteilt ausgeführt ist und aus einem Tragring (4) und einem damit verschraubten Haltering (3) besteht, und dass das zusätzliche Wälzlager mit den diagonalen Halterollen (6) zwischen dem Haltering (3) des Innenringes (1) und dem Nasenring (5) angeordnet ist.

3. Rollenlager nach Anspruch 1 oder 2, **dadurch gekennzeichnet, dass** die Halterollen (6) und die Tragrollen (8) in axialer Richtung gegenüberliegend am Nasenring (5) angeordnet sind.

4. Rollenlager nach Anspruch 1, **dadurch gekennzeichnet, dass** das zusätzliche Wälzlager als Kreuzrollenlager ausgebildet ist.

## Claims

1. Roller bearing, in particular slewing ring with no centre, consisting of an inner ring (1), formed as one or a plurality of parts, and an outer ring (2) and roller bodies (6, 7, 8) which are disposed therebetween, roll on races and guide a lug ring (5), attached to the outer ring (2), with support rollers (8) in the axial direction and with radial rollers (7) in the radial direction, **characterised in that** between the inner ring (1) and the lug ring (5) of the outer ring (2) an additional roller bearing with diagonal holding rollers (6) is disposed.

2. Roller bearing as claimed in claim 1, **characterised in that** the inner ring (1) is formed divided into two and consists of a support ring (4) and a holding ring (3) screwed thereto, and that the additional roller bearing is disposed with the diagonal holding rollers (6) between the holding ring (3) of the inner ring (1) and the lug ring (5).

3. Roller bearing as claimed in claim 1 or 2, **characterised in that** the holding rollers (6) and the support rollers (8) are disposed on the lug ring (5) in an opposing manner in the axial direction.

4. Roller bearing as claimed in claim 1, **characterised in that** the additional roller bearing is formed as a cross roller bearing.

## Revendications

1. Palier à rouleaux, en particulier grand palier à rouleaux à centre libre, comprenant une bague intérieure (1) et une bague extérieure (2), qui sont formées d'une pièce ou de plusieurs pièces, et, disposés entre celles-ci, des corps roulants (6, 7, 8) qui, roulant sur des chemins de roulement, guident, dans la direction axiale, avec des rouleaux porteurs (8) et dans la direction radiale, avec des rouleaux radiaux, une bague à talon (5), fixée à la bague extérieure (2), **caractérisé en ce que**, entre la bague intérieure (1) et la bague à talon (5) de la bague extérieure (2), est agencé un palier à rouleaux supplémentaire avec des rouleaux de retenue diagonaux (6).

2. Palier à rouleaux selon la revendication 1, **caractérisé en ce que** la bague intérieure (1) est divisée en deux et est composée d'une bague de support (4) et d'une bague de retenue (3), vissée l'une avec l'autre, et que le palier à rouleaux supplémentaire est agencé, avec les rouleaux de retenue (6) diagonaux, entre la bague de retenue (3) de la bague intérieure (1) et la bague à talon (5).

3. Palier à rouleaux selon revendication 1 ou 2, **caractérisé en ce que** le rouleau de retenue (6) et le rouleau porteur (8) sont disposés, vis-à-vis l'un de l'autre, dans la direction axiale, sur la bague à talon (5).

4. Palier à rouleaux selon la revendication 1, **caractérisé en ce que** le palier à rouleaux supplémentaire est réalisé en tant que palier à rouleaux croisés.
